# EUROPEAN PATENT APPLICATION

(11) **EP 4 411 174 A1**
(43) Date of publication of application: **07.08.2024**
(21) Application number: 24156116.6
(22) Date of filing: 06.02.2024
(51) Int. Cl.: F16H 3/093, F16H 37/04

(54) **DOUBLE CLUTCH ARCHITECTURE TRANSMISSION FOR AGRICULTURAL VEHICLES**

(30) Priority: 06.02.2023 IT 202300001881
(71) Applicant: CNH Industrial Italia S.p.A., 10156 Torino (IT)
(72) Inventor: SEDONI, Enrico, 10156 Turin (IT); FERRARI, Fabrizio, 10156 Turin (IT); REGGIANI, Massimo, 10156 Turin (IT); GIOFFRE, Luigi, 10156 Turin (IT)
(74) Representative: CNH Industrial IP Department

(57) **Abstract**

Architecture for a dual clutch transmission (1) for an off road vehicle provided with an input stage (A), a gear ratio stage (B) and a range gear ratio stage (C) operatively connected in series one to the other with respect to an input shaft (2) and an output shaft (3),
the transmission (1) comprises selection elements (17) configured to selectively couple gears (14, 15) of gear ratio stage (B) to respective first and second shafts (11, 12) and a gearing module (30) defining intermediate speed ratios with respect to the speed ratios of the rage gear ratio stage (C).

## Description

### TECHNICAL FIELD

The present invention relates to a dual clutch transmission architecture, in particular a dual clutch transmission architecture for an off road vehicle such as an agricultural vehicle and to a related method for controlling the gear shifting of such dual clutch transmission.

### BACKGROUND OF THE INVENTION

Transmissions for off road vehicles such as agricultural vehicles offer different configuration, for instance:
- manual shifted transmissions, in which all gears of the transmissions are engaged directly by the driver through lever mechanisms which command clutches, synchronizers and dog clutches to select the gear;
- semi-powershift transmission, in which some gears are engaged, manually or automatically, thanks to servo actuated mechanisms in powershift mode, i.e. by swapping the torque by a couple of clutches, and in which other gears are actuated by lever mechanisms which commands clutches, synchronizers and dog clutches to select the gear or by a servo-actuated mechanism which is not in powershift mode, i.e. which uses a single clutch and, when such clutch is opened, torque cannot pass through the transmission; and
- full powershift transmission, in which all gears of the transmission are engaged through servo actuated mechanism in powershift mode.

An important request that must be satisfied in modern mechanical transmission for agricultural vehicles is to have high efficiency across the full ground speed range, in order to improve the vehicle fuel consumption. In this respect a large use of wet clutches to build the semi-powershift or the full-powershift transmissions, generates more power losses inside the transmission when compared to the use of synchronizers and dog-clutches and, as consequence, a penalty of efficiency as consequence.

For this reason, in the art, the dual-clutch transmission, DCT, architecture is considered the most valuable layout for powershift transmissions in order to satisfy all the previous demands:
- it provides an high number of speed ratios with a mechanism that allow for a comfortable powershift (by swapping one couple of clutches); and
- it performs high efficiency, because a powershift layout is provided by only few couples of wet clutches accompanied by many synchronizers and dog-clutches.

Because of these advantages, recently DCT architecture has been applied in the field of the transmissions for agricultural vehicles. An example of such DCT architecture is disclosed in patent document WO2019091953 A1.

However such known architectures used big wet clutches that dissipate a considerable amount of energy, in particular for allowing shift between range gears.

Moreover, during shifting between gear ratio or range gear ratio, the inertia of the carried transmission elements is considerable. Therefore resistant torque is high and the fuel consumption is not neglectable during shifting.

In conclusion, the need is felt to improve existing DCT architecture for agricultural vehicle in order to improve their performances in all its working speed ranges and to improve the comfort during all gears shifting.

Moreover, it is requested to reduce the overall encumbrance/weight of the transmission architecture and to reduce the time for its manufacturing.

Aim of the present invention is to satisfy the above mentioned needs in a cost-effective and optimized way.

### SUMMARY OF THE INVENTION

The aforementioned aim is reached by an architecture for a dual clutch transmission and a related control method as claimed in the appended set of claims.

### BRIEF DESCRIPTION OF THE DRAWINGS

For a better understanding of the present invention, a preferred embodiment is described in the following, by way of a non-limiting example, with reference to the attached drawings wherein:
- Figure 1 is a schematic representation of a dual clutch transmission architecture according to a first embodiment of the invention;
- Figure 1A is a schematic representation of the first embodiment transmission with indication of torque path during an exemplarily operation;
- Figure 2 is a schematic representation of a dual clutch transmission architecture according toa second embodiment of the invention;
- Figure 2A is a schematic representation of the second embodiment transmission with indication of torque path during an exemplarily operation; and
- Figures 3A, 3B are tables indicating the activation of elements of the transmission architecture according to the invention.

### DETAILED DESCRIPTION OF THE INVENTION

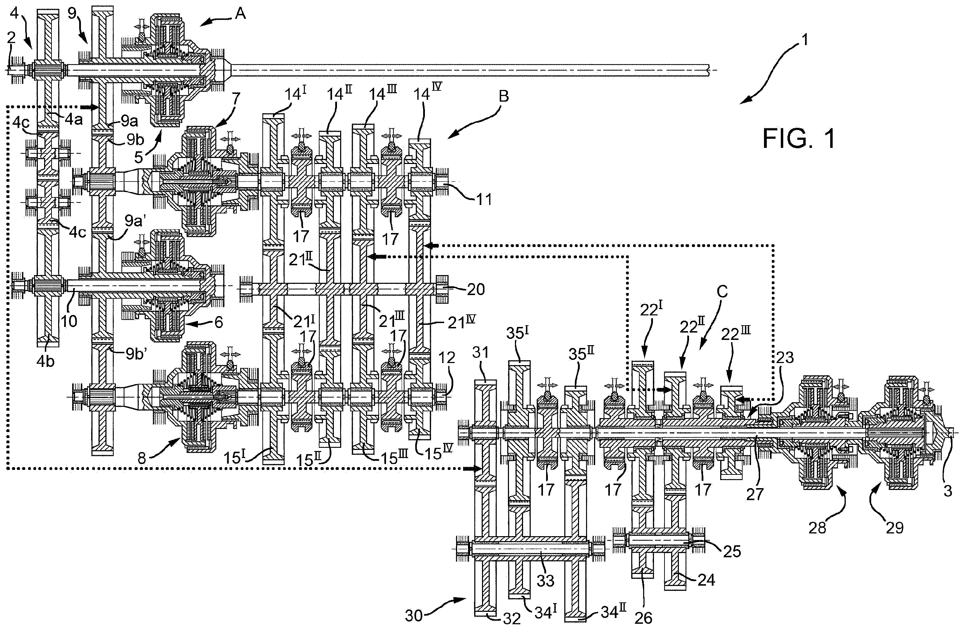

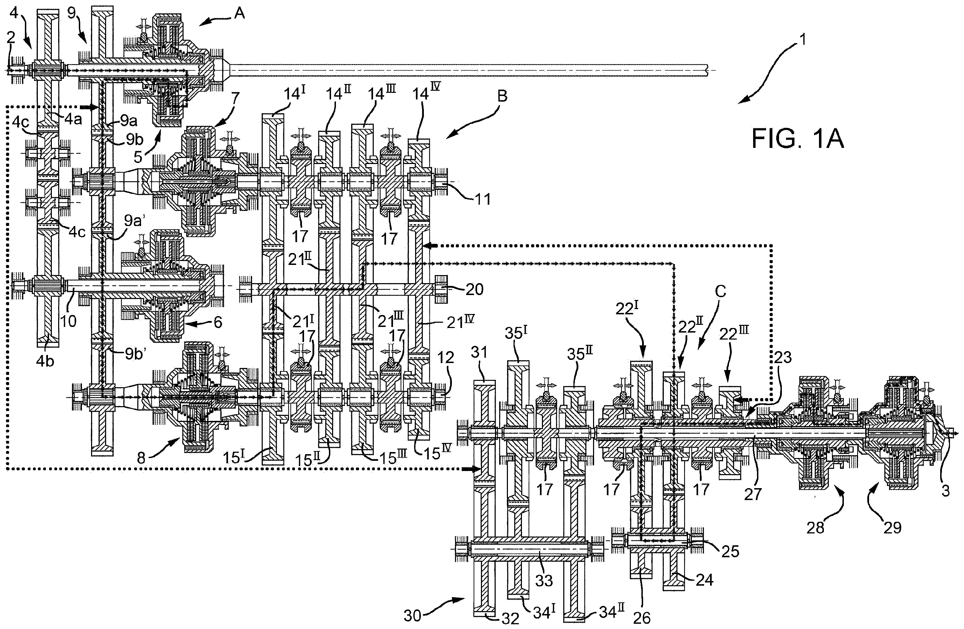

Figure 1 discloses a dual clutch transmission 1, in the following "transmission", for an off road vehicle, such as an agricultural vehicle, e.g. a tractor (not illustrated), comprising an engine input shaft 2, operatively connected to a torque source (not shown), such as an internal combustion engine of the work vehicle, and an output shaft 3, which can be coupled to a drive axle of the off road vehicle.

The transmission 1 essentially comprises, operatively connected in series one to the other between input shaft 2 and output shaft 3, an input stage A, a gear ratio stage B and a range gear ratio stage C.

The input stage A may be realized in different manner to provide torque to a first main clutch 5, hereinafter "forward clutch", and torque in reversed direction to a second main clutch 6, hereinafter "rearward clutch", both carried by the engine input shaft 2.

In disclosed exemplarily embodiment, input stage A comprises a gearing 4 comprising a first wheel 4a fixedly carried by the engine shaft 2 and configured to mesh with a second wheel 4b rotatably fixed to a support shaft 10 carrying the rearward clutch 6. In particular, the first and the second wheels 4a, 4b may mesh via a counterwheel arrangement 4c, e.g. comprising two idler wheels as shown.

As per se known, the forward clutch 5 couples the engine input shaft 2 to the output shaft 3 in order to allow a forward motion of the work vehicle while the rearward clutch 6 couples the engine input shaft 2 to the output shaft 3 in order to allow a rearward motion of the work vehicle. In the disclosed exemplarily embodiment, such occurrence is given by the peculiar construction of gearing 4 as described above.

Transmission 1 further comprise a first clutch 7, hereinafter "even clutch", and a second clutch 8, hereinafter "odd clutch". The even clutch 7 is configured to couple a first auxiliary shaft 11, hereinafter "even shaft", with the forward clutch 5. The odd clutch 8 is configured to couple a second auxiliary shaft 12, hereinafter "odd shaft", with the rearward clutch 6.

Advantageously, the forward clutch 5 and the rearward clutch 6 are coupled to the even and odd clutches 7, 8 by a gearing 9. The gearing 9 comprises first wheels 9a, 9a' carried free in rotation to engine shaft 2 and the support shaft 10 respectively and a pair of second wheels 9b, 9b' respectively carried fixedly at rotation by even and odd clutch housings.

In particular, the first wheel 9a carried by the engine shaft 2 meshes with the second wheel 9b engaged with even clutch 7 and this latter meshes with the first wheel 9a' carried by support shaft 10 that further meshes with the second wheel 9' engaged with odd clutch 8.

In view of above, thanks to the coupling of wheels 9a, 9a', 9b, 9b' the even and odd shafts 11, 12 may be coupled to the rearward clutch 6 or the rearward clutch 5 via different gear ratios.

It is noticed that the even and the odd clutches 8, 9 are axially offset with respect to forward and rearward clutches 5, 6. One of this latter is at least partially comprised between the even and the odd clutches 8, 9 along a transversal direction with respect to axial direction of the transmission, i.e. the direction of the axis of engine shaft 2.

Furthermore, it is noticed that even and odd clutches 8, 9 are collinear along such transversal direction such as the forward and rearward clutches 5, 6. Accordingly, since they are staggered one with respect to the other along the transversal direction, the axial extension of the transmission 1 is reduced.

In particular, it is noticed that forward and rearward clutches 5, 6 are placed on the same side of even and odd clutches with respect to gearing 9.

The even shaft 11 and the odd shaft 12 each comprises a plurality of selection elements 17 e.g. synchronizer or dug clutches, fixedly carried by the respective shaft 11, 12 and therefore rotate together with to these latter. Obviously selection elements 17 may comprise other equivalent connection means such as joint clutches.

The gear ratio stage B comprises a plurality of gears 14, 15 accommodated on respectively even or odd shafts 11, 12 and having a different size one with respect to the other and that are supported in a rotatable free manner the respective shaft 11, 12, e.g. by means of bearings, so that they are not forced to rotate to the same speed of the respective shaft 11, 12 when the engaging dog clutch 17 is in their neutral position.

Preferably the even shaft 11 may comprise four gears 14, namely a first gear 14^{I} having the biggest diameter, a fourth gear 14^{IV} having the smallest diameter and a second and third gears 14^{II}, 14^{III} having respective diameters comprised between the ones of first and the fourth gears 14^{I}, 14^{IV}.

Similarly, the odd shaft 12 may comprise four gears 15, namely a first gear 15^{I} having the biggest diameter, a fourth gear 15^{IV} having the smallest diameter and a second and third gears 15^{II}, 15^{III} having respective diameters comprised between the ones of first and the fourth gears 15^{I}, 15^{IV}.

Advantageously the gear 14^{I} has the same diameter of gear 15^{I}, gear 14^{II} has the same diameter of gear 15^{II}, gear 14^{III} has the same diameter of gear 15^{III} and gear 14^{IV} has the same diameter of gear 15^{IV}.

The gears of gears sets 14, 15, when selected, represent the different speed ratios of the transmission, namely a first, a second, a third, a fourth, a fifth, a sixth, a seventh and a eight speed ratio according to the specific selection of one of the aforementioned wheels 14, 15.

As said above, gears of the gears sets 14, 15 may be selected by a dog clutch 17 configured to couple the shaft with the chosen gear. Preferably the even shaft 11 may comprise two dog clutches 17 interposed respectively between the gear 14^{I} - 14^{II} and 14^{III} -14^{IV}. Similarly the odd shaft 12 may comprise two dog clutches 17 interposed respectively between the gear 15^{I} - 15^{II} and 15^{III} -15^{IV}.

The transmission 1 further comprises an intermediate shaft 20 configured to engage with gear wheels 14, 15 and with gear range stage C. In particular, the intermediate shaft 20 is configured to carry a number of wheels 21 corresponding to the wheels of the gear ratio stage B. Preferably such wheels are carried in a rigid manner to rotation by intermediate shaft 20.

Accordingly, intermediate shaft 20 carries a first wheel 21^{I}, a second wheel 21^{II}, a third wheel 21^{III} and a fourth wheel 21^{IV}.

The gear range stage C is configured to engage a number of the wheels 21 carried by intermediate shaft 20 and the gearing 9 to the output shaft 3 by choosing among a plurality of gear ratios, defined by respective range gears 22, which are multiplied by the gear ratio of gear ratio stage B.

In the disclosed exemplarily embodiment, the gear range stage G comprises a first range gear 22^{I} called "low" range, a second range gear 22^{II} "medium" range, and a third range gear 22^{III} called " fast" ; the three range gears have different dimensions. In this way, the transmission provides twenty four possible gear ratios, due to the eight gear ratios repeated over the three range gear ratios.

In particular, the medium range gear 22^{II} and the fast range gear 22^{III} meshes with corresponding wheels 21 of the intermediate shaft 20, in particular, with the third and fourth wheels 21^{III}, 21^{IV} of the intermediate shaft 20.

The gear ratio wheels 22 are all carried in a rotatably free manner on a support shaft 23 and selectively engageable in rotation to this latter thanks to selection means 17 as the ones mentioned above.

It is furthermore noticed that the low and medium range wheels 22^{I}, 22^{II} are connected together. In particular, the medium range wheel 22^{II} meshes with a first support wheel 24 that is carried, preferably fixed at rotation, by a support shaft 25. The support shaft 25 further carries, fixed at rotation, a second support wheel 26, having a diameter different from first support wheel 24, and meshing with the low range wheel 22^{I}.

Support shaft 23 that carries the range wheels 22 is preferably carried in a rotatably free manner over an auxiliary shaft 27. The support shaft 23 is selectively connectable to the output shaft 3 via clutch means 28 realized between the output shaft 3 and support shaft 23. Similarly, the support shaft 23 is selectively connectable to the auxiliary shaft 27 thanks to clutch means 29 realized between the auxiliary shaft 27 and support shaft 23.

It is noticed that clutch means 28, 29 are preferably realized with a housing in common, i.e. they are concentric along axial direction of the transmission, i.e. along the axis of auxiliary shaft 27. The aforementioned housing is fixed at rotation to output shaft 3.

Transmission architecture 1 further comprises an additional gearing module 30 operationally interposed between gearing 9 of input stage A and auxiliary shaft 27 of the range stage C.

In particular, the additional gearing module 30 is configured to provide an additional number of speed ratios in addition to the speed ratio provided by the combination of gear wheels 14, 15 and range gear wheels 22. In particular, if the number of range gear wheels is N, the number of additional speed ratios provided by gearing module 30 is N-1. In this way, gearing module 30 is configured to provide a jump speed ratio among two different speed ratio defines between two different range wheel gears.

The additional gearing module 30 comprises a first wheel 31 carried, preferably in a rotatably free manner, by the auxiliary shaft 27 and configured to mesh with one of wheels of the gearing 9, in particular with first wheel 9a carried by engine shaft 2. The additional gearing module 30 further comprises a second wheel 32 configured to mesh with the first wheel 31 and carried by a supporting shaft 33, preferably in a fixed manner with respect to rotation.

The supporting shaft 33 further carries a third and a fourth wheels 34^{I}, 34^{II}, in a fixed manner to rotation and configured to mesh with respective fifth and sixth wheels 35^{I}, 35^{II}.

Fifth and sixth wheels 35^{I}, 35^{II} are carried in a rotatably free manner by auxiliary shaft 27 and the gearing module 30 comprises selection means 17, as the aforementioned ones, configured to selectively fix at rotation wheels 35^{I}, 35^{II} to auxiliary shaft 27.

It is noticed that even if the range stage C is represented axially offset in the drawings, it may be placed vertically above the input and range stages A, B, therefore having a compact transmission extension along axially direction. Such disposition is schematically represented by dotted lines of the drawings.

The above described clutches 5, 6, 7, 8, 28, 29 selection elements 17 can be selected by respective actuators (not shown) that are controlled by an electronic control unit (not shown). The electronic control unit controls said clutches or said electronic motors by sending control electric signals directed to the respective clutches or motors to be controlled.

Electronic control unit can be either the ECU of the vehicle or driveline ECU of the vehicle. The electronic unit is configured to control the above cited elements of the transmission 1 as per direct input command of the user of the vehicle or in automatic way following the shift control logic deployed into a specific software code, which can be memorized into the electronic unit.

The operation of the transmission 1 according to the first embodiment of invention is described in the following.

In particular, the operation is described making the assumption that the transmission 1 is providing torque to output shaft 3 in the "first slow" gear ratio.

In a first example of operation, shown in figure 1A, it is represented a standard operation in "first slow". In such configuration, the torque provided by input stage A passes through forward clutch 5, odd clutch 8 to odd shaft 12. First gear wheel 15^{I} is engaged via selection elements 17 and therefore transmits torque to the first wheel 21^{I.} Then torque passes via third wheel 21^{III} towards the medium range wheel 22^{II} that is connected to the low range wheel 22^{I} via selection means 17 via wheels 25 and 26. Therefore, since low range wheel 22^{I} is coupled to support shaft 23 that is connected via clutch 28 to output shaft 3, then the torque flows to output shaft 3.

Shift between speed ratios is managed by properly controlling selection means 17 and clutches 5, 6, 7, 8, 28, 29 thereby providing a powershift transmission along the twenty-six speed ratio.

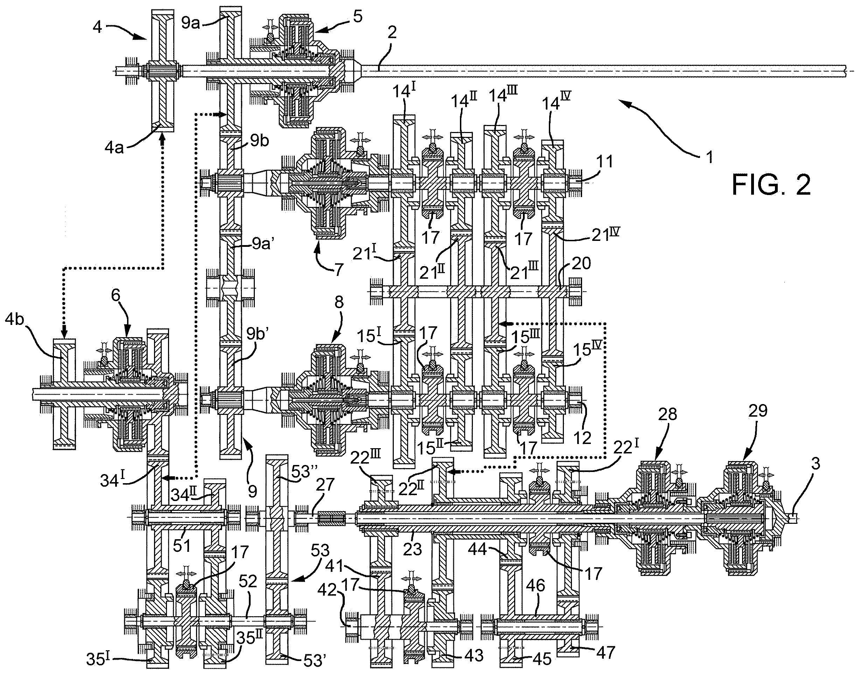

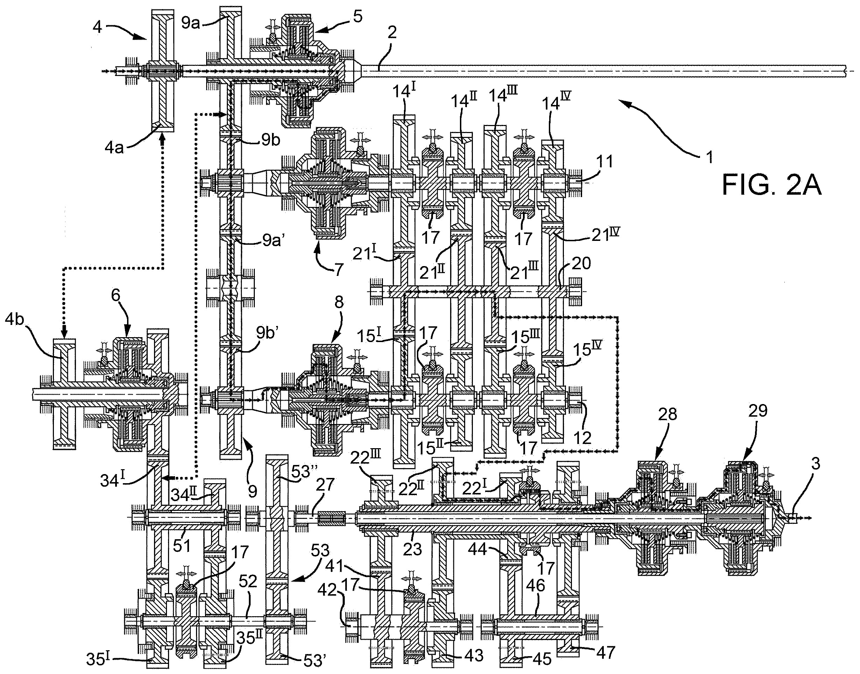

In the embodiments of figure 2, some modifications to input stage A and to range stage C occurs with respect to the above described first embodiment, as detailed below.

Input stage A is operationally analogous to the described one and the gearing 4 is represented schematically by the dotted line joining first wheel 4a to the wheel 4b. In gearing 9 the first wheel 9a'' is not connected to the rearward clutch 6 that is therefore placed not collinear with the forward clutch 5.

Referring to the range stage C, the low and medium range wheels 22^{I}, 22^{II} are carried in a rotatably free manner by support shaft 23 and only the medium range wheel 22^{II} engage with one of wheels 21, specifically the third wheel 22^{III}. Conversely, the fast range wheel 22^{III} is carried in a fixed manner at rotation by the support shaft 23.

In the proposed arrangement, the fast range wheel 22^{III} and the medium range wheels 22^{II} are operationally coupled together such as the low range wheel 22^{I} and the medium range wheels 22^{II}

In particular, the fast range wheel 22^{III} meshes with a first wheel 41 that is carried by a shaft 42, e.g. in a rotation rigid manner. The shaft 41 further carries a second wheel 43 that is preferably carried by this latter in a rotatably free manner and selectively fixed at rotation therewith via selection means 17. Such second wheel 43 is configured to mesh with the medium range wheel 22^{III}.

The medium range wheel 22^{III} is fixed at rotation with a third wheel 44 that is therefore rotatably free carried on the support shaft 23 and that is configured to mesh with a fourth wheel 45 that is carried by a supporting shaft 46, preferably in a fixed way with respect to rotation. The supporting shaft 46 further carries, preferably fixedly at rotation, a fifth wheel 47 that meshes with the low range wheel 22^{I}.

The gearing module 30 comprises, as in the precedingly described embodiment, a pair of wheels 341, 3411 configured to engage with respective further pair of wheels 351, 3511. One of the pair of wheels 341, 3411 is configured to mesh with gearing 9, in particular to the first wheel 9a carried by engine shaft 2.

The pair of wheels 341, 3411 is advantageously fixedly carried by a support shaft 51 while the further pair of wheels 351, 3511 is carried in a rotatably free manner on an auxiliary shaft 52. The auxiliary shaft 52 is operationally coupled to the auxiliary shaft 27 via a gearing 53. Preferably, such gearing 53 comprises a wheel 53' carried fixedly by the auxiliary shaft 27 and a further wheel 53'' carried fixedly by auxiliary shaft 52 and meshing with the wheel 53'.

The operation of the transmission 1 according to the SECOND embodiment of invention is described in the following.

In particular, the operation is described making the assumption that the transmission 1 is providing torque to output shaft 3 in the "first slow" gear ratio.

In a first example of operation, shown in figure 2A, it is represented a standard operation in "first slow". In such configuration, the torque provided by input stage A passes through forward clutch 5, odd clutch 8 to odd shaft 12. First gear wheel 15^{I} is engaged via selection elements 17 and therefore transmits torque to the first wheel 21^{I.} Then torque passes via third wheel 21^{III} towards the medium range wheel 22^{II} that is connected to the low range wheel 22^{I} via selection means 17 via wheels 44, 45, 47. Therefore, since low range wheel 22^{I} is coupled to support shaft 23 that is connected via clutch 28 to output shaft 3, then the torque flows to output shaft 3.

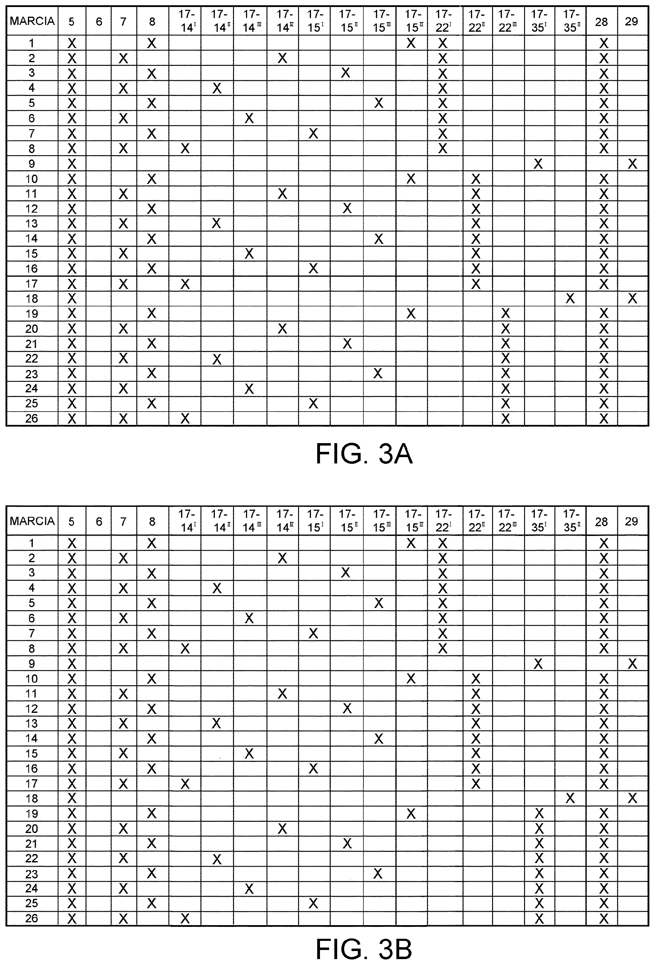

Shift between speed ratio is managed by properly controlling selection means 17 and clutches 5, 6, 7, 8, 28, 29 thereby providing a powershift transmission along the twenty-six speed ratio, , as detailed by the combination of engagement of figures 3A, 3B.

For both embodiments, the vehicle may be provided by a dedicated control software code in the ECU of the transmission configured to recognize signals from sensors installed on the vehicle, e.g. the torque demand at the output shaft 3 and the speed of the engine input shaft 2, and automatically define the gearshift without any user intervention.

The invention also relates to a method for operating a transmission 1 as described above for shifting from a gear 14, 15 of a gear ratio stage B in combination a gear 22 of range gear stage C to a further gear 14, 15 of the gear ratio stage B in combination the same gear 22 of range gear stage C:
- receiving an input for shifting from an initial gear 14, 15 of the gear ratio stage B to a further gear 14, 15 of the gear ratio stage B;
- coupling the further gear 14, 15 with the respective shaft 11, 12;
- swapping even and odd clutches 7, 8 thereby allowing torque to flow from the clutch 7, 8 associated to the initial gear 14, 15 to the clutch 7, 8 associated to the further gear 14, 15;
- uncoupling the initial gear 14, 15 from the respective shaft 11, 12.

The invention also relates to a method for operating a transmission 1 as described above for shifting from a gear 14, 15 of a gear ratio stage B in combination a gear 22, 35 of range gear stage C to a further gear 14, 15 of the gear ratio stage B with a further gear 22, 35 of range gear stage C:
- receiving an input for shifting from an initial gear 14, 15 of the gear ratio stage B to a further gear 14, 15 of the gear ratio stage B;
- coupling the further gear 14, 15 with the respective shaft 11, 12 and one of gears 22, 35 of the range stage C;
- swapping even and odd clutches 7, 8 thereby allowing torque to flow from the clutch 7, 8 associated to the initial gear 14, 15 to the clutch 7, 8 associated to the further gear 14, 15 and swap clutches 28, 29 of the range stage C;
- uncoupling the initial gear 14, 15 from the respective shaft 11, 12 and the one of gears 22, 35 of the range stage C.

In view of the foregoing, the advantages of a dual clutch transmission 1 according to the invention and the related method are apparent.

The transmission architecture 1 according to the invention increases the efficiency of the system.

The proposed arrangement provides a better and facilitated mounting, thereby allowing a cheaper and quicker manufacture of the transmission architecture.

It is furthermore noticed, that the range gear wheels may be designed smaller since the inertia carried by the range gear wheel is smaller with respect to known transmission architecture. Indeed the torque is split into different paths thanks to the specific arrangement of wheels on the intermediate shaft 20 and of the range wheels on the support shaft 23.

The presence of the clutches 28, 29 in range stage C allows the gear ratio shift with a single clutch swap, thereby improving the smoothness of range shift.

The presence of two additional speed ratios that allow speed jump between two different range wheels allows a smoother speed change thereby improving comfort of the driver.

The peculiar disposition of the input stage clutches, staggered, allows a very axially compact transmission arrangement, thereby increasing useful space in the transmission or in the vehicle wherein the latter is arranged.

It is clear that modifications can be applied to the described transmission 1 which do not extend beyond the scope of protection defined by the claims.

For example, the number and typology of gears of gear ratio, range and idler gears may be varied according to vehicle necessity.

Further, the transmission may comprise different elements with respect to the described one, e.g. the number and/or typologies of clutches, gears and clutches may be varied. Accordingly, input stage A may be realized in any convenient manner.

Moreover, the control and typology of selection means 17 may be implemented with any typology of control, e.g. a hydraulic, electric or pneumatic in alternative or in combinations.

## Claims

1. An architecture for a dual clutch transmission (1) for an off road vehicle, said dual clutch transmission (1) comprising:
• an input shaft (2) configured to be coupled to a power source of said work vehicle,
• an output shaft (3) configured to be connected to a driving axle of said work vehicle,
• an input stage (A), a gear ratio stage (B) and a range gear ratio stage (C) operatively connected one to the other with respect to said input shaft (2) and said output shaft (3),
• a forward clutch (5) and a rearward clutch (6),
wherein said input stage (A) is configured to transmit torque from said input shaft (2) to said forward clutch (5) and said rearward clutch (6),
wherein said gear ratio stage (B) comprises first and second shafts (11, 12) each configured to carry a plurality of gears (14, 15) carried in a rotatably free manner by said first and second shafts (11, 12), said first and second shafts (11, 12) being configured to be coupled, via respective first and second clutches (7, 8), to said forward clutch (5) and said rearward clutch (6),
said transmission (1) comprising an intermediate shaft (20) operatively interposed between said gear ratio stage (B) and said range gear stage (C),
said intermediate shaft (20) carrying a plurality of wheels (21) configured to engage said wheels (14, 15) to provide a predetermined gear ratio between said engine input shaft (2) and said intermediate shaft (20),
said range gear stage (C) comprising a support shaft (23) carrying a plurality of range gears wheels (22), said range gears wheels (22) being configured to engage at least one among said wheels (21) carried by said intermediate shaft (20),
wherein at least some among said range gears wheels (22) are carried in a rotatably free manner by said support shaft (23),
said transmission (1) comprises selection elements (17) configured to selectively couple said gears (14, 15, 22) to the respective shaft (11, 12, 23),
wherein said support shaft (23) is operatively connectable to said output shaft (3) and is carried in a rotatably free manner by an auxiliary shaft (27) and selectively connectable to this latter,
wherein said range gear stage (C) further comprises a gearing module (30) operatively interposed between the input stage (A) and said auxiliary shaft (27).

2. Architecture according to claim 1, wherein said gearing module (30) defines at least a gear ratio that defines a speed ratio intermediate to two speed ratio corresponding to two among said range gears wheels (22).

3. Architecture according to claim 1 or 2, wherein said support shaft (23) is connectable to said output shaft (3) via clutch means (28) .

4. Architecture according to any of the preceding claims, wherein said support shaft (23) is connectable to said auxiliary shaft (27) via clutch means (29).

5. Architecture according to claims 3 and 4, wherein said clutch means (28, 29) have a common housing that is fixed at rotation to said output shaft (3).

6. Architecture according to any of the preceding claims, wherein said even and odd clutches (8, 9) are collinear, at least one between said forward and rearward clutches (5, 6) being transversally interposed to said even and odd clutches (8, 9) along a transversal direction with respect to longitudinal axis of said input shaft (2).

7. Architecture according to claim 6, wherein said forward and rearward clutches (5, 6) being collinear one to the other.

8. Architecture according to any of the preceding claims, wherein said input stage (A) comprises a gearing (9) connecting operationally at least one between said forward and rearward clutches (5, 6) and said even and odd clutches (7, 8).

9. Architecture according to any of the preceding claims, wherein said input stage (A) comprises a gearing (4) connecting operationally said forward and rearward clutches (5, 6).

10. Architecture according to claims 8 or 9, wherein said forward and rearward clutches (5, 6) being axially offset, along the direction of longitudinal axis of said input shaft (2), with respect to said gearing (4, 9), on the same side of said odd and even clutches (7, 8).

11. Architecture according to claim 8, wherein said gearing module (30) comprises a first gear (31) operationally coupled to said gearing (9) and carried in a rotatably free manner by said auxiliary shaft (27) and a pair of wheels (35^{I}, 35^{II}) carried in a rotatably free manner by said auxiliary shaft (27) and selectively connectable to this latter by selection means (17), said first wheel (31) being operationally coupled to a shaft (33) carrying in a fixed manner to rotation a pair of counterwheels (34^{I}, 33^{II}), said pair of counterwheels (34^{I}, 33^{II}) being configured to mesh with said pair of wheels (35^{I}, 35^{II}).

12. Architecture according to claim 11, wherein all said range wheels (22) are carried in a rotatable free manner by said support shaft (23), at least two among said wheels (22) being operatively connected to a respective wheel (21) carried by said intermediate shaft (20), the remaining among said wheels (22) being operatively connected to said one among said wheels (22).

13. Architecture according to claim 8, wherein said gearing module (30) comprises a pair of wheels (35^{I}, 35^{II}) carried in a rotatably free manner by a first support shaft (52) and selectively connectable to this latter by selection means (17), and a pair of counterwheels (34^{I}, 33^{II}) configured to mesh with said pair of wheels (35^{I}, 35^{II}) and carried in a fixed manner by a second support shaft (51), one among said pair of counterwheels (34^{I}, 33^{II}) being operationally connected to said gearing (9), said first support shaft (52) being operationally connected to said auxiliary shaft (27) .

14. Architecture according to claim 13, wherein a pair among said range wheels (22) is carried in a rotatable free manner by said support shaft (23) and at least a wheel among said range wheels (22) is carried in a fixed manner by said support shaft (23), one among said pair of rotatably free carried wheels being operatively connected to a wheel (21) carried by said intermediate shaft (20), the remaining among said wheels (22) being operatively connected to said one among said pair of rotatably free carried wheels.

15. Architecture according to any of the preceding claims, wherein said selection elements (17) comprises a synchronizer or a dog clutch.

16. Architecture according to any of the preceding claims further comprising a control unit configured to control actuators configured to regulate the operation of said clutches and said selection means (17).

17. Method ford for operating a transmission (1) as claimed in claims 16 for shifting from a gear (14, 15) of a gear ratio stage (B) in combination a gear (22) of range gear stage (C) to a further gear (14, 15) of the gear ratio stage (B) in combination the same gear (22) of range gear stage (C):
• receiving an input for shifting from an initial gear (14, 15) of the gear ratio stage (B) to a further gear (14, 15) of the gear ratio stage (B);
• coupling the further gear (14, 15) with the respective shaft (11, 12);
• swapping even and odd clutches (7, 8) thereby allowing torque to flow from the clutch (7, 8) associated to the initial gear (14, 15) to the clutch (7, 8) associated to the further gear (14, 15);
• uncoupling the initial gear (14, 15) from the respective shaft (11, 12).

18. Method ford for operating a transmission (1) as claimed in claims 16 for shifting from a gear (14, 15) of a gear ratio stage (B) in combination a gear (22, 35) of range gear stage (C) to a further gear (14, 15) of the gear ratio stage B with a further gear (22, 35) of range gear stage (C):
• receiving an input for shifting from an initial gear (14, 15) of the gear ratio stage (B) to a further gear (14, 15) of the gear ratio stage (B);
• coupling the further gear (14, 15) with the respective shaft (11, 12) and one of gears (22, 35) of the range stage (C);
• swapping even and odd clutches (7, 8) thereby allowing torque to flow from the clutch (7, 8) associated to the initial gear (14, 15) to the clutch (7, 8) associated to the further gear (14, 15) and swap clutches (28, 29) of the range stage (C) ;
• uncoupling the initial gear (14, 15) from the respective shaft (11, 12) and the one of gears (22, 35) of the range stage (C).
